# FASCICULE DE BREVET EUROPEEN

(11) **EP 0 597 734 B1**
(45) Date de publication et mention de la délivrance du brevet: **12.08.1998**
(21) Numéro de dépôt: 93402212.0
(22) Date de dépôt: 10.09.1993
(51) Int. Cl.: C03B 27/004, C03B 23/03

(54) **Procédé et dispositif pour la trempe par contact de vitrages**
Verfahren und Vorrichtung zum Härten mittels Kontakt von Windscheiben
Method and apparatus for tempering windshields through contact

(30) Priorité: 12.09.1992 DE 4230611
(43) Date de publication de la demande: 18.05.1994
(73) Titulaire: SAINT-GOBAIN VITRAGE, 92400 Courbevoie (FR); VEGLA Vereinigte Glaswerke GmbH, 52066 Aachen (DE)
(72) Inventeur: Bremer, Carsten, D-Wassenberg 4 (DE); Nowoczyn, Hans-Werner, D-5100 Aachen (DE); Mucha, Horst, D-5100 Aachen (DE); Diederen, Werner, D-5120 Herzogenrath (DE); Kuster, Hans-Werner, D-5100 Aachen (DE)
(74) Mandataire: Menes, Catherine

(56) Documents cités:
- EP-A- 0 392 886

## Description

La présente invention a trait aux techniques de trempe des vitrages et plus précisément aux techniques dites de trempe par contact dans lesquelles les vitrages sont trempés par pressage entre deux plateaux refroidis intérieurement par un fluide.

De manière courante, la trempe d'un vitrage est obtenue en refroidissant brutalement celui-ci, préalablement chauffé à la température de trempe, à l'aide de jets d'air froid soufflés en direction des faces principales des vitrages. Selon les cas, le vitrage est en position verticale, suspendu à des pinces qui agrippent le bord supérieur ou en position horizontale, posé sur un cadre constitué par un anneau ouvert en son centre. Dans tous les cas, si un vitrage vient à se briser au cours de l'opération de trempe - ce qui arrive de temps à autre - les fragments de verre tombent sans entrave, par exemple dans un bac à calcin. Le bris d'un vitrage n'altère donc pas nécessairement le rythme de la production.

Il est aussi connu de pratiquer une trempe par contact assurée par le contact intensif du vitrage chaud avec les surfaces refroidies à l'eau de deux plateaux d'une presse. Des dispositifs appropriés à ce procédé ont été décrits par exemple dans les brevets ou demandes de brevets DE-A-1 771 790, EP-B1-277 074 et DE-A-40 19 181.

Avec des plateaux conçus comme des moules de bombage, il est possible de bomber les vitrages selon une forme souhaitée et simultanément, de les tremper. Par rapport à la trempe à l'air traditionnelle, le procédé de trempe par contact a pour avantage d'éviter les déformations ou les gauchissements qui peuvent apparaître le cas échéant, lorsque le vitrage n'est maintenu lors de la trempe que par ses bords ou un de ses côtés.

Pour d'une part, s'affranchir des marques de pinces, et d'autre part, assurer un contact avec les plateaux presseurs sur la totalité de la surface du vitrage, la trempe par contact est effectuée en position horizontale. De ce fait, si le vitrage se brise au cours de la trempe, les fragments sont tout ou partie retenus par le plateau presseur inférieur qui doit être entièrement débarrassé de ceux-ci avant la trempe du prochain vitrage faute de quoi, le vitrage serait endommagé par ces fragments et le revêtement de surface du plateau presseur fortement détérioré.

L'invention a pour but un procédé et un dispositif de trempe par contact tel que les risques d'endommagement des plateaux presseurs, consécutifs au bris d'un vitrage en cours de trempe, soit fortement minimisés, tout en autorisant des conditions de marche industrielles, notamment un fonctionnement des dispositifs en automatique.

Ce but est atteint par un procédé de trempe par contact selon lequel les vitrages de verre, chauffés dans un four horizontal sont, de manière automatisée, transférés dans une presse constituée par deux plateaux refroidis intérieurement par un fluide et, après l'opération de trempe, évacués hors de la presse, une surveillance acoustique de la presse étant couplée avec des moyens de commande du processus de sorte que le signal acoustique produit par le bris du vitrage dans la presse entraîne l'interruption du processus.

L'invention a également pour objet un dispositif pour la mise en oeuvre de ce procédé comportant, un four horizontal, une presse avec deux plateaux refroidis intérieurement par un fluide, notamment de l'eau, des moyens de transfert des vitrages du four à la presse, des moyens d'évacuation des vitrages trempés et des moyens électroniques de commande du dispositif, un plateau presseur étant couplé avec un capteur de bruit dont le signal électrique active un circuit interrupteurs desdits moyens électroniques de commande du dispositif dès que le vitrage se brise dans la presse.

De fait, il est très difficile de trouver un critère de bris du vitrage dans la réponse qui soit à la fois fiable et pratique. Des essais ont montré par exemple, que la surveillance optique du plateau presseur inférieur est inadéquate. En revanche, il s'est avéré que la vibration acoustique produite lors d'un bris de verre dans la presse présente un spectre de fréquences caractéristiques qui se prête mieux que d'autres critères au but recherché.

La surveillance acoustique conforme à l'invention de la presse et l'interruption automatique du processus de production lors de l'apparition d'un signal acoustique indiquant un bris de vitrage dans la presse, permettent d'éviter l'endommagement des surfaces sensibles des outils presseurs dû à la présence de fragments de verre à arêtes vives sur le plateau presseur inférieur. De plus, on évite la production de vitrages dont la qualité optique serait affectée par ces fragments. L'interruption automatique de la production, qui peut être liée simultanément à un signal avertisseur optique ou acoustique permettant d'alerter le personnel, sera mise à profit pour nettoyer la presse, ce qui peut, par exemple, être effectué à la main.

Dans un développement avantageux de l'invention, cette opération d'enlèvement des éclats de verre et de nettoyage du plateau inférieur, est effectuée par un dispositif mécanique ou pneumatique approprié, de préférence mis en route automatiquement lors de l'apparition du signal indiquant le bris du vitrage. De cette façon, la presse est remise en état de fonctionnement d'une manière entièrement automatique et en un laps de temps minimum.

Etant donné que le bruit transmis par l'air et provoqué par le bris d'un vitrage est souvent assez faible et est, en outre, fréquemment couvert par des bruits de machines, dans un développement particulièrement avantageux de l'invention, un transducteur électromécanique est couplé directement à un des plateaux, de préférence le plateau presseur inférieur qui est monté fixe, de telle sorte que lors du bris d'un vitrage, il détecte le bruit de structure induit dans le plateau presseur. A titre de transducteur électromécanique, des microphones spéciaux pour bruits de structure, qui peuvent également être qualifiés de capteurs d'accélération, se sont avérés particulièrement adéquats.

D'autres particularités, avantages et détails de l'invention ressortiront de la description suivante d'un exemple de réalisation préféré, faite en référence aux dessins annexés qui représentent :
* **figure 1**: une vue schématique d'une installation selon l'invention pour la trempe par contact de vitrages,
* **figure 2** : le schéma synoptique d'un bloc électronique pour le conditionnement du signal.

Une installation destinée à fabriquer des vitrages trempés tels qu'ils sont utilisés en grande quantité, par exemple comme vitrages de sécurité dans les véhicules automobiles, comporte un four continu à rouleaux 1 à travers lequel les vitrages plans 2 sont transportés sur des rouleaux 3 entraînés en rotation par des moyens connus ici non représentés et sont alors chauffés à leur température de trempe d'environ 650°C. A l'extrémité du four 1, les vitrages chauds 2 sont soulevés des rouleaux transporteurs 3 à l'aide d'une plaque aspirante 4 et sont transférés à l'aide de cette plaque aspirante 4 dans le poste de trempe 20.

La plaque aspirante 4 est fixée à un chariot 5, monté sur des galets 6 qui se déplacent sur des rails 7. Le chariot 5 est pourvu d'un moteur d'entraînement 8 qui est commandé via une ligne 9 par l'unité de commande 10. Sur le chariot 5 est, en outre, installé un ventilateur 11 qui produit la dépression nécessaire pour l'aspiration des vitrages 2.

A la sortie du four continu 1 se trouve le poste de trempe 20 comportant une presse pour la trempe par contact. La presse est constituée d'un plateau presseur inférieur 22, monté fixe, et d'un plateau presseur supérieur 24, monté mobile dans le sens vertical à l'aide d'un vérin de pression 23. Le plateau presseur inférieur 22 et le plateau presseur supérieur 24 ont une structure telle que décrite, par exemple, dans la demande de brevet EP-A-404 677. Ils sont refroidis par un fluide - en général de l'eau de refroidissement - dans le cas du plateau presseur inférieur 22, admis par un tuyau d'alimentation 25 et évacué par un tuyau 26. Des tuyaux flexibles 27 et 28 assurent l'alimentation et l'évacuation du fluide de refroidissement du plateau supérieur 24. Dans le cas illustré, les deux plateaux 22 et 24 présentent des surfaces de pressage courbes, de sorte que les vitrages sont simultanément trempés et bombés dans une forme souhaitée.

L'installation comprend, en outre, un dispositif pour évacuer automatiquement les vitrages trempés 2' hors de la presse de trempe ouverte. Ce dispositif d'évacuation comprend un chariot 30, déplacé via des galets 31 sur les rails 7, pourvu d'un moteur d'entraînement 32 commandé via une ligne 33 par l'unité de commande 10. Le chariot 30 est équipé de ventouses 34 au moyen desquelles les vitrages trempés 2' sont saisis et soulevés à l'aide de vérins pneumatiques 35 avant que le chariot 30 se déplace au-dessus du convoyeur à rouleaux 38 sur lequel les vitrages 2' seront déposés.

Conformément à l'invention, un - ou de préférence plusieurs - capteurs acoustiques 40 sont couplés mécaniquement à un des plateaux de la presse d'une manière telle que lors du bris d'un vitrage, ils détectent le bruit de structure transmis à ce plateau. Comme dans le cas ici représenté, ce couplage est de préférence effectué sur le plateau fixe de la presse, en l'occurrence le plateau inférieur 22. Les capteurs de bruit sont de préférence utilisés avec une caractéristique de sensibilité maximale lors d'un maximum d'intensité du bruit de structure induit lors du bris d'un vitrage dans le plateau presseur auquel ils sont couplés. Des capteurs acoustiques sont, par exemple, des capteurs dits d'accélération, c'est-à-dire des transducteurs électromagnétiques tels que ceux utilisés pour mesurer des vibrations mécaniques et des chocs. De tels transducteurs électromagnétiques sont couplés directement au plateau presseur associé.

De préférence, on utilise des capteurs de vibrations dits absolus qui, contrairement aux capteurs de vibrations relatifs, n'exigent pas de point de référence fixe. Il peut s'agir par exemple de transducteurs électromagnétiques comportant un élément transducteur piézo-électrique et une masse oscillant librement couplée à cet élément, soit à titre de transducteur d'épaisseur ou un transducteur de cisaillement. Si un tel système est accéléré dans le sens axial, la masse oscillante exerce une force proportionnelle à son accélération sur l'élément piézo-électrique, déforme cet élément et produit ainsi des charges électriques qui sont proportionnelles à la force.

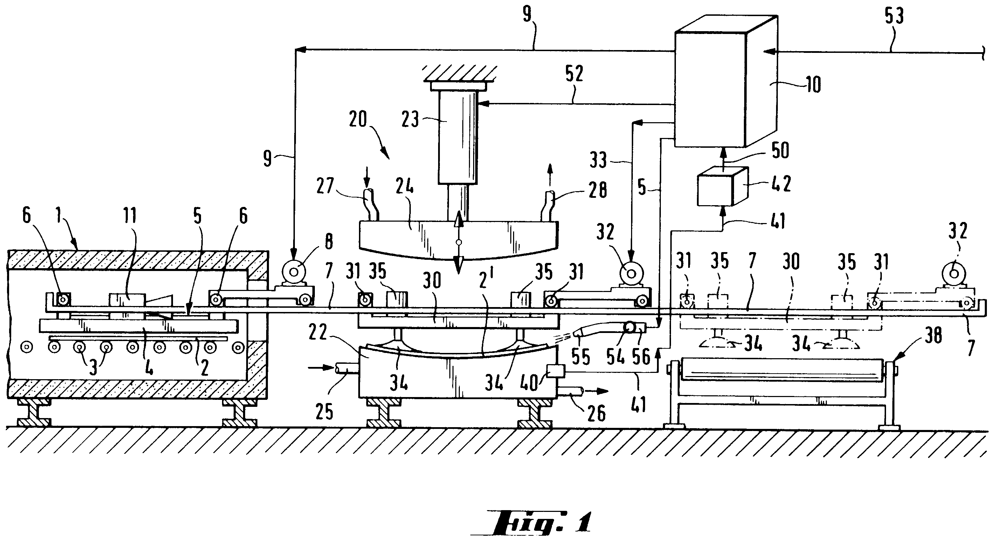

On utilise avantageusement des capteurs d'accélération piézo-électriques de ce type dont la caractéristique de fréquence correspond largement à la bande de fréquences des vibrations produites lors du bris d'un vitrage. Comme dans le cas représenté à la figure 1, le signal de sortie du capteur acoustique 40 est de préférence acheminé via une ligne flexible 41 à un étage de conditionnement de signal 42.

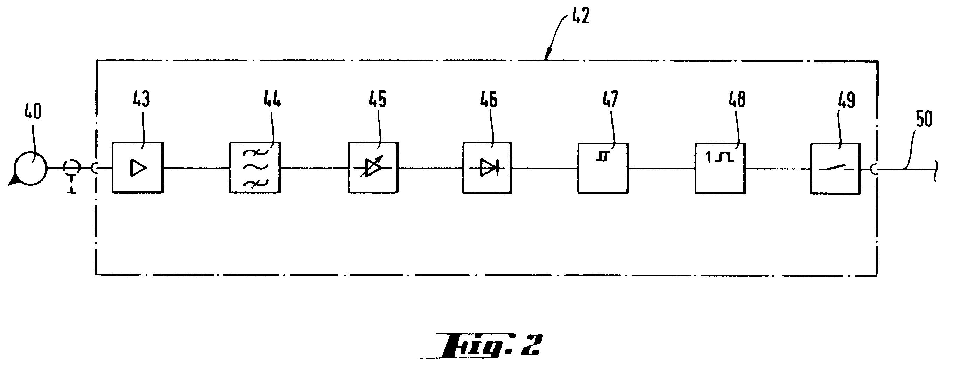

La structure de l'étage de conditionnement de signal 42 est illustrée sur la figure 2. Il comprend un préamplificateur 43, un filtre passe-bande 44, un amplificateur de signal réglable 45, un redresseur 46, un déclencheur à valeur de seuil 47, un élargisseur d'impulsions 48 et une sortie de signal 49. Le signal, relativement faible, provenant du capteur acoustique 40 est initialement amplifié suffisamment dans le préamplificateur 43, puis est acheminé au filtre passe-bande 44 dans lequel les bruits ambiants et les bruits de machines sont supprimés. Le signal ainsi formé est à nouveau amplifié dans un amplificateur réglable 45, puis est redressé au moyen du redresseur 46. Ensuite, il est acheminé au déclencheur à valeur de seuil réglable 47 qui n'est libéré que le temps pendant lequel un bris peut être escompté, c'est-à-dire le temps pendant lequel un vitrage se trouve dans la presse. Le commutateur à valeur de seuil 47 est suivi par l'intermédiaire de l'allongeur d'impulsions 48 de la sortie de signal 49.

Lorsqu'un signal est émis par la sortie de signal 49, il active via la ligne 50, l'unité de commande 10 qui coordonne, en tant que commande de processus central, les différentes étapes du procédé et veille au déroulement de l'ensemble du processus. L'unité de commande 10 est programmée, de telle façon que le bris d'un vitrage entraîne l'ouverture de la presse via la ligne de commande 52. Mais cette ouverture de la presse n'est pas accompagnée de l'activation des moteurs 8 et 32. Tant que la poursuite du déroulement du processus n'est pas à nouveau autorisée via la ligne 53. Le chariot 5 reste dans sa position dans le four 1 et, de même le chariot 30 est dans sa position au-dessus du convoyeur d'évacuation 38. Pendant ce temps, le plateau presseur 22 est débarrassé des éclats de verre. Le nettoyage peut s'effectuer à la main, auquel cas l'autorisation de reprise, via la ligne 53 au terme de l'opération de nettoyage, peut être donnée manuellement. Il peut cependant aussi être entièrement automatique, par exemple à l'aide de buses de soufflage 55 raccordées à une conduite d'air comprimé 54, les électrovalves 56 qui libèrent le flux d'air comprimé étant activées également par l'unité de commande 10 via la ligne 57.

## Revendications

1. Procédé de trempe par contact de vitrages (2') selon lequel les vitrages (2 ; 2'), chauffés dans un four horizontal (1), sont, de manière automatisée, transférés dans une presse constituée par deux plateaux (22, 24) refroidis intérieurement par un fluide et après l'opération de trempe, évacués hors de la presse, **caractérisé par** une surveillance acoustique de la presse, associée avec les moyens de commande (10) du processus de sorte que le signal acoustique produit par le bris d'un vitrage (2') dans la presse entraîne l'interruption du processus.

2. Dispositif pour la mise en oeuvre du procédé selon la revendication 1 comportant, un four horizontal (1), une presse avec deux plateaux (22, 24) refroidis intérieurement par un fluide, des moyens de transfert (4 ; 5 ; 6 ; 7 ; 8 ; 11) des vitrages (2) du four (1) à la presse, des moyens d'évacuation (7; 30 ; 31 ; 32 ; 34 ; 35) des vitrages trempés (2'), **caractérisé en ce qu'**il comporte en outre des moyens électroniques de commande (10) du dispositif, et en ce qu'à un plateau presseur (22) est coupé au moins un capteur de bruit (40) dont le signal électrique active un circuit interrupteur desdits moyens électroniques de commande (10) en cas de bris d'un vitrage (2') dans la presse.

3. Dispositif selon la revendication 2, **caractérisé en ce que** le capteur de bruit (40) est utilisé avec une caractéristique de sensibilité maximale lors d'un maximum d'intensité du bruit de structure induit dans le plateau presseur lors du bris d'un vitrage.

4. Dispositif selon l'une des revendications 2 à 3, **caractérisé en ce que** le capteur de bruit (40) est installé dans le plateau presseur inférieur (22).

5. Dispositif selon l'une des revendications 2 à 4, **caractérisé en ce que** le capteur de bruit est un transducteur électromagnétique couplé directement à un plateau presseur.

6. Dispositif selon la revendication 5, **caractérisé en ce que** ledit transducteur électromagnétique comporte un élément transducteur piézo-électrique et une masse oscillant librement coupée à cet élément.

7. Dispositif selon une ou plusieurs des revendications 2 à 6, **caractérisé par** un étage de conditionnement de signal (42) installé en aval du capteur de bruit (40).

8. Dispositif selon la revendication 7, **caractérisé en ce que** l'étage de conditionnement de signal (42) comprend un préamplificateur (43), un filtre passe-bande (44), un amplificateur de signal réglable (45), un redresseur (46), un déclencheur à valeur de seuil (47) et un circuit élargisseur d'impulsions (48).

9. Dispositif suivant une ou plusieurs des revendications 2 à 8, **caractérisé par** un dispositif de nettoyage automatique (55) pouvant être activé par le signal provenant de l'étage de conditionnement de signal (42) en vue de nettoyer le plateau presseur inférieur (22) pour le débarrasser des fragments de verre.

## Claims

1. Process for the contact tempering of glazings (2') according to which the glazings (2, 2'), heated in a horizontal furnace (1), are in automated manner transferred into a press constituted by two platens (22, 24) internally cooled by a fluid and following the tempering operation discharged from the press, characterized by an acoustic monitoring of the press, associated with process control means (10), so that the acoustic signal produced by the breaking of a glazing (2') in the press leads to the interruption of the process.

2. Apparatus for performing the process according to claim 1 comprising a horizontal furnace (1), a press with two platens (22, 24) internally cooled by a fluid, means (4, 5, 6, 7, 8, 11) for the transfer of the glazings (2) from the furnace (1) to the press and means (7, 30, 31, 32, 34, 35) for discharging the tempered glazings (2'), characterized in that it also comprises electronic means (10) for the control of the apparatus and in that with a platen (22) is coupled at least one noise sensor (40), whose electric signal activates an interrupting circuit of said electronic control means (10) in the case of the breakage of a glazing (2') in the press.

3. Apparatus according to claim 2, characterized in that the noise sensor 940) is used with a maximum sensitivity characteristic during a maximum intensity of the structural noise induced in the platen during the breaking of a glazing.

4. Apparatus according to one of the claims 2 and 3, characterized in that the noise sensor (40) is installed in the lower platen (22).

5. Apparatus according to one of the claims 2 to 4, characterized in that the noise sensor is an electromagnetic transducer directly coupled to a platen.

6. Apparatus according to claim 5, characterized in that said electromagnetic transducer comprises a piezoelectric transducer element and an oscillating mass freely coupled to said element.

7. Apparatus according to one or more of the claims 2 to 6, characterized in that a signal conditioning stage (42) is installed downstream of the noise sensor (40).

8. Apparatus according to claim 7, characterized in that the signal conditioning stage (42) incorporates a preamplifier (43), a band pass filter (44), a regulatable signal amplifier (45), a rectifier (46), a threshold value trip switch (47) and a pulse broadening circuit (48).

9. Apparatus according to one or more of the claims 2 to 8, characterized by an automatic cleaning device (55), which can be activated by the signal coming from the signal conditioning stage (42) with a view to cleaning the lower platen (22) in order to remove glass fragments therefrom.

## Patentansprüche

1. Verfahren zum Kontaktvorspannen von Glasscheiben (2'), bei dem die in einem Horizontalofen (1) aufgeheizten Glasscheiben (2; 2') automatisch in eine Presse mit zwei innen flüssigkeitsgekühlten Preßplatten (22, 24) überführt und nach dem Vorspannvorgang aus der Presse entnommen werden, **gekennzeichnet durch** eine akustische Überwachung der Presse, die Steuermitteln (10) des Prozesses derart zugeordnet ist, daß das durch Brechen einer Glasscheibe (2') erzeugte akustische Signal die Unterbrechung des Prozesses bewirkt.

2. Einrichtung zur Durchführung des Verfahrens nach Anspruch 1 mit einem Horizontalofen (1), einer Presse mit zwei innen flüssigkeitsgekühlten Preßplatten (22, 24), Mitteln zum Überführen (4; 5; 6; 7; 8; 11) der Glasscheiben (2) vom Ofen (1) zur Presse und Mitteln zum Entnehmen (7; 30; 31; 32; 34; 35) der vorgespannten Glasscheiben (2'), **dadurch gekennzeichnet,** daß sie außerdem elektronische Mittel zum Steuern (10) der Einrichtung umfaßt, und daß an eine Preßplatte (22) mindestens ein Schallaufnehmer (40) angekoppelt ist, dessen elektrisches Signal beim Bruch einer Glasscheibe (2') in der Presse einen Unterbrecherkreis der besagten elektronischen Mittel zum Steuern (10) aktiviert.

3. Einrichtung nach Anspruch 2, **dadurch gekennzeichnet,** daß ein Schallaufnehmer (40) mit einer Empfindlichkeitscharakteristik verwendet wird, die beim Intensitätsmaximum des beim Bruch einer Glasscheibe (2') in die Preßplatte induzierten Körperschalls ihre maximale Empfindlichkeit hat.

4. Einrichtung nach Anspruch 2 oder 3, **dadurch gekennzeichnet,** daß der Schallaufnehmer (40) in der unteren Preßplatte (22) angeordnet ist.

5. Einrichtung nach einem der Ansprüche 2 bis 4, **dadurch gekennzeichnet,** daß der Schallaufnehmer ein direkt an eine Preßplatte gekoppelter elektromagnetischer Wandler ist.

6. Einrichtung nach Anspruch 5, **dadurch gekennzeichnet,** daß der besagte elektromagnetische Wandler ein piezoelektrisches Wandlerelement und eine mit diesem gekoppelte frei schwingende Masse umfaßt.

7. Einrichtung nach einem oder mehreren der Ansprüche 2 bis 6, **gekennzeichnet durch** eine dem Körperschallaufnehmer (40) nachgeschaltete Signalaufbereitungsstufe (42).

8. Einrichtung nach Anspruch 7, **dadurch gekennzeichnet,** daß die Signalaufbereitungsstufe (42) einen Vorverstärker (43), einen Bandpaß (44), einen einstellbaren Signalverstärker (45), einen Gleichrichter (46), einen Schwellschwertschalter (47) und eine Impulsverlängerungsschaltung (48) umfaßt.

9. Einrichtung nach einem oder mehreren der Ansprüche 2 bis 8, **gekennzeichnet durch** eine durch das von der Signalaufbereitungsstufe (42) kommende Signal aktivierbare automatische Reinigungsvorrichtung (55) zum Reinigen der unteren Preßplatte (22) von Glasbruchstücken.
